# EUROPÄISCHE PATENTSCHRIFT

(11) **EP 3 268 280 B1**
(45) Veröffentlichungstag und Bekanntmachung des Hinweises auf die Patenterteilung: **30.10.2019**
(21) Anmeldenummer: 16722040.9
(22) Anmeldetag: 10.03.2016
(51) Int. Cl.: B64D 17/80, B64D 25/12

(54) **INTELLIGENTES FALLSCHIRMRETTUNGSSYSTEM FÜR BEMANNTE UND UNBEMANNTE LUFTFAHRZEUGE**
INTELLIGENT PARACHUTE RESCUE SYSTEM FOR MANNED AND UNMANNED AERIAL VEHICLES
SYSTÈME DE SAUVETAGE INTELLIGENT PAR PARACHUTES POUR AÉRONEFS AVEC ET SANS PILOTE

(30) Priorität: 10.03.2015 DE 202015001833 U
(43) Veröffentlichungstag der Anmeldung: 17.01.2018
(73) Patentinhaber: Kapi Electronics GmbH, 16227 Eberswalde (DE)
(72) Erfinder: KALINKA, Holger, 16227 Eberswalde (DE)
(74) Vertreter: Haschick, Gerald
(86) Internationale Anmeldenummer: PCT/DE2016/100108
(87) Internationale Veröffentlichungsnummer: WO 2016/141928

(56) Entgegenhaltungen:
- WO-A2-2011/002517
- DE-A1-102011 053 678
- GB-A- 1 214 875
- US-A- 3 097 819
- US-A- 5 810 293

## Beschreibung

Trotz ständig verbesserter Qualität von Luftfahrzeugen und Erhöhung der Luftsicherheit kann es immer wieder zu Störungen und Unfällen kommen. Hierbei wird es immer wichtiger, die havarierten Luftfahrzeuge sicher zur Erde zurückzuführen. In erster Linie dabei steht die Rettung von Menschenleben. Rettungssysteme werden zurzeit in Ultraleichtflugzeuge eingebaut. Bereits seit geraumer Zeit gibt es aber auch die Möglichkeit, Motorflugzeuge größer 450 Kg Startmasse ähnlich wie bei Ultraleichtflugzeugen mit einem Fallschirmrettungssystem auszustatten, welche das gesamte Flugzeug ohne Schaden für die Insassen zu Boden bringt. Bei Triebwerksausfall, Unsteuerbarkeit und/oder einer Kollision über schwierigem Gelände ist der Fallschirm ein erheblicher Sicherheitsfaktor und möglicherweise die einzige Lösung der Luftrettung. Es gibt mittlerweile schon etliche Beispiele für gelungene "Landungen" mittels Fallschirmrettungssysteme für Luftfahrzeuge.

Leider sind diese Rettungssysteme hauptsächlich mit pyrotechnischen Anlagen (Raketen) verbunden, die bei Auslösung zur Rettung ausgeschossen werden und den Fallschirm aus einer Verpackung oder Container ziehen, dieser ist wiederum am Luftfahrzeug befestigt. Bemannte und unbemannte Luftfahrzeuge sind damit praktisch mit einer scharfen Rakete unterwegs. Der Abschuss der Rakete ist mit einem Feuerstrahl verbunden, welcher auch die empfindliche Fallschirmkappe beschädigen kann. Gleiches gilt für chemische Treibstoffe. Auch nach einem Flugunfall haben die Einsatz- und Rettungskräfte ständig Probleme bei nicht ausgelöster Rettung die Pyrotechnik zu entschärfen und auch dabei nicht selbst in Gefahr zu geraten.

Aus dem Stand der Technik ist die WO 2011/002517 A2 bekannt, welche ein mit Turbinen angetriebenes individuelles Flugsystem beschreibt. Diese Druckschrift stellt den nächstliegenden Stand der Technik dar und offenbart den Oberbegriff der Ansprüche 1 und 2. Dabei ist ein mit Turbinen-, Mini- oder Mikroturbinen angetriebenes individuelles Flugsystem gegeben, das als Strahlpackung konfiguriert ist und einen Rahmen mit einer darauf angeordneten aerodynamischen Schale umfasst. Mindestens zwei Turbinen-, Mini- oder Mikroturbinen-Motoren sind auf den gegenüberliegenden Seiten des Rahmens positioniert. Die Motoren selbst können in aerodynamischen Gondeln umhüllt sein. Das Jet-Pack ist so konfiguriert, dass ein einzelner Pilot das Jet-Pack auf den Rücken legen kann. In der Schale befinden sich Brennstoffzellen, Kraftstoffpumpen und Ventile zur Energieversorgung der Motoren. Weitere Steuerelemente mit mindestens einer ECU und einem Gyroskop sind ferner darin positioniert. Beschrieben sind ein vektorisiertes Düsenschubsystem oder bewegliche Motoren zur Steuerung der Flugrichtung. Ein handbetriebener Regler ermöglicht es dem Piloten, Steuersignale wie Drossel und Haltung vorzusehen. Ein integrierter Flughelm bietet darüber hinaus eine Heads-up-Anzeige von Fluginformationen. Das individuelle Flugsystem ist weiter so konfiguriert, dass ein vertikaler Abzug von Ruhe, Schweben, Drehen auf Achse, anhaltender Flug und kontrollierte vertikale Landung ermöglicht wird. Das individuelle Flugsystem ist für den Einsatz durch Ersthelfer geeignet, um es einem Ersthelfer zu ermöglichen, eine individuell bedürftige Person zu erreichen sowie zu Sport- und Transportzwecken.

Weiterhin ist aus der Offenlegungsschrift DE 10 2011 053 678 A1 ein "Tragschrauber" bekannt. Diese Erfindung betrifft einen Tragschrauber, der eine Trägerstruktur mit einem Rotormast, einen Rotorkopf, der am Rotormast angebracht ist, und eine Rotorhalterung mit Rotorschlaggelenkmitteln aufweist, an denen ein Rotor angelenkt ist, sowie eine Propellervorrichtung, die so ausgebildet ist, dass sie während des Betriebs des Tragschraubers einen Vortrieb erzeugen kann, wobei der Tragschrauber eine Fallschirmrettungseinrichtung aufweist, die zumindest einen Fallschirm und Auslösemittel zum Auslösen des mindestens einen Fallschirms aufweist.

Aus der Patentschrift US 5,810,293 sind Notlandungshilfsapparate für ein Flugzeug unter Verwendung eines Fallschirms bekannt. Die vorliegende Erfindung bezieht sich auf eine Notlandungshilfsvorrichtung eines Flugzeugs unter Verwendung eines Fallschirms, wodurch ein rascher Unfallabsturz eines Flugzeugs vermieden werden kann, indem der Rutschensatz innerhalb eines Vorrichtungsaufnahmeraums freigegeben wird und der Landeabstand des Flugzeugs verringert werden kann für den Fall einer Notlandung. Daher ist die vorliegende Erfindung wirksam, um einen möglichen Verlust von Leben und die Beschädigung des Flugzeugs selbst zu verringern.

Die Patentschrift GB 1 214 875 beschreibt eine Notlandungsvorrichtung für ein Flugzeug. Diese umfasst einen Behälter, der auf dem Rumpf montiert ist und mit Nasenabschnitten ausgebildet ist, die angelenkt sind, um sich zu den punktierten Linienpositionen unter der Wirkung des Mechanismus gegen die Wirkung einer Rückhaltefeder zu öffnen, wobei der Luftstrom von dem lösbaren oberen Teil des Behälters abheben kann, um zu ermöglichen, dass ein Fallschirm und die damit verbundenen Takelagelinien ausgestoßen werden. Die Takelinien sind durch einen Ring mit einer Hebelinie verbunden, die ihrerseits mit einem Paar von Leitungen verbunden ist, die an den Flügeln befestigt sind, und eine Linie, die normalerweise auf eine Rolle gewickelt ist. Der Mechanismus kann aus dem Flugzeug betrieben werden, oder er kann durch ein ferngesteuertes Steuersignal aktiviert werden.

Des Weiteren ist aus der US 3,097,819 ein Sicherheitsfallschirm für defekte Flugzeuge bekannt. Diese Erfindung bezieht sich auf einen Sicherheitsfallschirm für defekte Flugzeuge, der eine aufrechte, sanfte Landung in Notfällen versichert. Gegeben ist eine Fallschirmmontage für Flugzeuge mit einem in dem Rumpf des Flugzeugs befestigten und nach außen offenen Behälter, fernbetätigte Klappenabdeckungen für den Behälter, einen Hauptschirm in dem Behälter, einen Hilfsschirm, der an dem Hauptfallschirm in dem Behälter befestigt ist, ein leichterer Luftkörper, der an dem Hilfsschirm befestigt ist, eine Einrichtung zum Lösen des Körpers und des Hilfsschirmes vor dem Lösen des Hauptschirmes, wobei der leichtere Luftkörper einen Helium-gefüllten Kegel, einen Stiel auf dem Kegel und eine Federauswurfeinrichtung für den Schaft aufweist.

Aufgabe der Erfindung ist es, ein intelligentes Fallschirmrettungssystem für bemannte und unbemannte Luftfahrzeuge ohne Verwendung von pyrotechnischen Treibmitteln zu finden.

Die Aufgabe wird erfindungsgemäß dadurch gelöst, dass die Patentansprüche 1 bis 4 realisiert werden.

Dabei wurde ein intelligentes Fallschirmrettungssystem für bemannte und unbemannte Luftfahrzeuge so entwickelt, dass
- dass die Flug- und Motordaten des Luftfahrzeuges mit einem Datenlogger eingebracht und ausgewertet werden und dadurch eine Handauslösung und/oder eine automatische Auslösung des Fallschirmcontainers ausgeführt wird,
   - dass nach der Erfassung der Flug- und Motordaten und der Auswertung des Datenloggers eine Fernübertragung genutzt wird und somit eine drahtlose Fernauslösung zum Ausbringen des Fallschirmcontainers stattfindet,
- dass nach Auslösung des Fallschirmcontainers eine definierte und gerichtete komprimierte Pressluft aus einer Druckflasche so optimiert wird, dass der Fallschirmcontainer mit dem innen liegenden Rettungsfallschirm geregelt ausgebracht wird,
- dass ein Fallschirmcontainer, bestehend aus einer Rettungskapsel mit einem Rettungsfallschirm und einem Hilfsfallschirm, gegeben ist und die Rettungskapsel in einem Druckluftcontainer des Fallschirmcontainers vorhanden ist und dabei eine Auslösefunktion über eine verbundene Druckflasche mit Pressluft und ein Steuerventil zwischen der Druckflasche und dem Druckluftcontainer des Fallschirmcontainers stattfindet,
- dass ein Rettungsfallschirm in einer mehrteiligen, nicht fest geschlossenen mit mehreren Gleitringen versehenen Kapsel eingefasst ist, welche wiederum in einem angepassten Fallschirmcontainer integriert ist, um diesen mittels komprimierter Pressluft auszubringen,
- dass ein Rettungsfallschirm so verpackt ist, dass dieser mittels anliegendem flexiblen, gleitfähigen und mit Sollbruchstellen ausgestatteten Verpackungssystem im dafür angepassten Fallschirmcontainer integriert ist, um diesen mittels komprimierter Pressluft auszubringen.

Zusätzlich wird ein Datenlogger für die Messdatenerfassung von Flug und Motordaten zum Einsatz gebracht, um das Ausbringen des Rettungsschirmes optimal zu steuern. Dieses Datenlogger-System mit Schaltausgängen ist erfindungsgemäß an einem Steuerventil zwischen Fallschirmcontainer und Druckluftflasche anzuschließen.

Das erfindungsgemäße System ist bevorzugt überall dort einsetzbar, wo Fallschirmrettungssysteme mittels pyrotechnischer oder chemischer Motore und/oder Treibmittel ausgebracht werden.

Technische Funktionalitäten und Parameter:
- intelligentes System
- keine gefährlichen Treibstoffe
- schnelles und einfaches Wirkprinzip
- keine aufwendigen mechanischen Konstruktionen, welche das sichere Ausbringen der Rettungstechnik behindern könnten
- bessere Kontrolle der Treibstoffe durch Anzeige
- unkomplizierte vorgeschriebene Wartungen möglich
- Schutz der Fallschirmkappe und deren Systeme vor Hitze und/oder chemischen Treibstoffen
- umweltfreundliche Treibstoffe
- ungefährliche Entschärfung des Fallschirmrettungssystems.

Nachfolgend wird anhand der Figuren ein Ausführungsbeispiel beschrieben.

Dabei zeigen die:
- Figur 1: die Funktionsweise des Fallschirmcontainers 77
- Figur 2: den Fallschirmcontainer 77
- Figur 3: die Anordnung der Fallschirme in der Rettungskapsel 20
- Figur 4: die Anordnung der Fallschirme in der Rettungskapsel 20
- Figur 5: die Verbindung Datenlogger 15 mit Fallschirmcontainer 77 und Luftfahrzeug 14.

Die Methode beruht darauf, mittels komprimierter Pressluft einen Rettungsfallschirm 3 für Luftfahrzeuge 14 auszubringen.

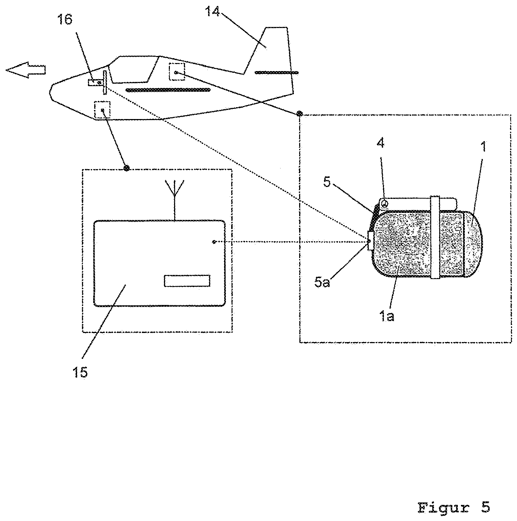

Ein Datenlogger (Fig. 5) 15 zur Erfassung von GPS-Daten, wie zum Beispiel Ground Speed (GS) und Höhe, leitet diese erfassten Daten über Schaltausgänge an ein Steuerventil, welches zwischen der Pressluftflasche und dem Druckluftcontainer, in dem der Fallschirmcontainer 77 integriert ist, geschaltet wird. Der Datenlogger (Fig. 5) 15 kann zusätzlich auch Beschleunigungssensoren und/oder Lagesensoren beinhalten.

Bei Gefahr kann das System (Fig. 5) per Hand 16 und/oder automatisch über das Steuerventil 5a ausgelöst werden. Des Weiteren wird im Steuerventil 5a ein gewisses Luftvolumen "vorgehalten", um eine optimale und schnelle Auslösung zu ermöglichen. Gleichzeitig wird negativem Temperaturverhalten durch Luftexpansion entgegengewirkt. Bei automatischer Auslösung kann diese auch bei unbemannten Luftfahrzeugen (UAV) mittels Funkkontakt zum Datenlogger (Fig. 5) 15 im Luftfahrzeug ferngesteuert erfolgen. Der Datenlogger (Fig. 5) 15 ist hierbei mit einem GSM/Sat- oder Funkempfänger ausgestattet. Der Datenlogger (Fig. 5) 15 liefert zusätzlich alle relevanten Informationen für die Entscheidung zur Luftrettung.

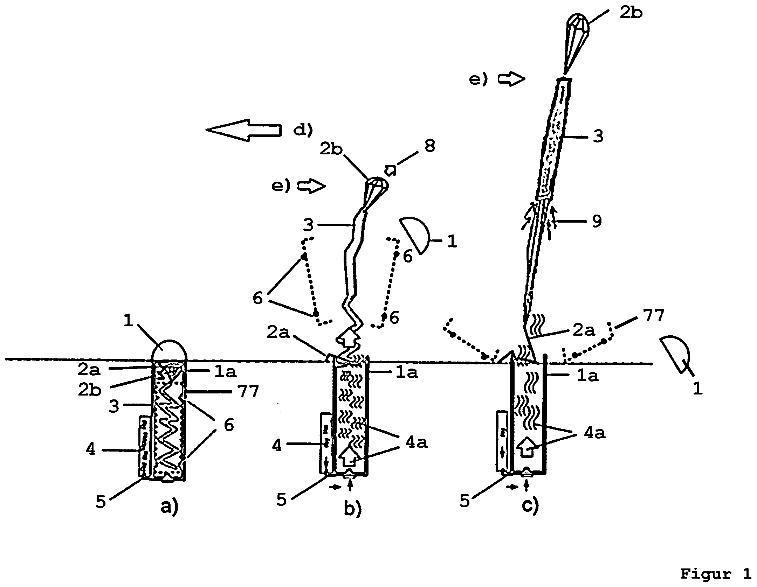

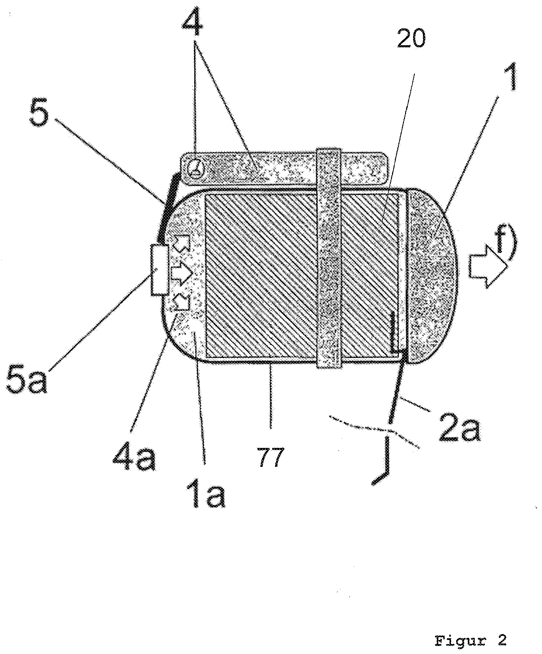

Dabei kann das Steuerventil 5a vorteilhaft auch in der Ausführung als elektronisches Steuerventil angesprochen werden, welches direkt mit der Handauslösung 16 bzw. den Schaltausgängen des Datenloggers 15 elektrisch verbunden ist. Die komprimierte Pressluft in der Druckflasche (Fig. 1) 4; (Fig. 2) 4 inklusive Druckanzeige am Druckluftcontainer 1a, welche auf den Fallschirmcontainer 77 abgestimmt ist, drückt nach Auslösung über die direkte Pressluftflaschenauslassöffnung (Fig. 1) 5; (Fig. 2) 5; (Fig. 5) 5 über das Steuerventil 5a in den Druckluftcontainer 1a. Hierbei ist die Verbindung zwischen Druckflasche 4 und Druckluftcontainer 1a auf die sich schnell expandierende Luftmasse und den damit entstehenden Vereisungen anzupassen. Ein Hilfsfallschirm (Fig. 1) 2b vorteilhaft mit einer internen Expansionsfeder liegt gespannt im Ruhezustand (Fig. 1) a) auf dem System und ist mit der Kappenspitze des Rettungsfallschirmes 3 fest verbunden.

Eine nicht mit dem Fallschirmcontainer 77 fest verbundene Containerhaube 1, vorteilhaft aus leichtem Plastmaterial, schließt den Fallschirmcontainer 77 mit interner Rettungskapsel 20.

Bei Auslösung des Systems, (Fig. 1) b) drückt die eindringende Pressluft 4a auf die Rettungskapsel 20 mit internem Rettungsfallschirm 3 und schießt diese aus dem Druckluftcontainer 1a. Die Containerhaube 1 wird weggedrückt, und der Hilfsfallschirm 2b kann sich entspannen bzw. wird freigegeben. Mit einer zusätzlichen Zugkraft 8 unter Ausnutzung gegebener Anströmungen e) und der gegebenen Flugrichtung d) Gleichzeitig trägt der Hilfsfallschirm zur Straffung des sich öffnenden Rettungsfallschirmes bei, (Fig. 1) c) 3, damit schnell einströmende Luft 9 zur Befüllung des Rettungsfallschirmes erfolgen kann.

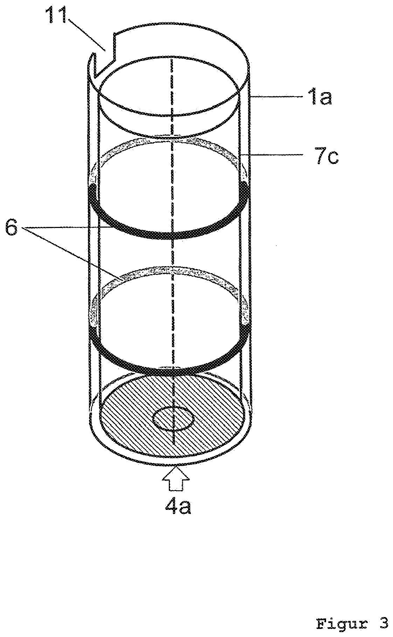

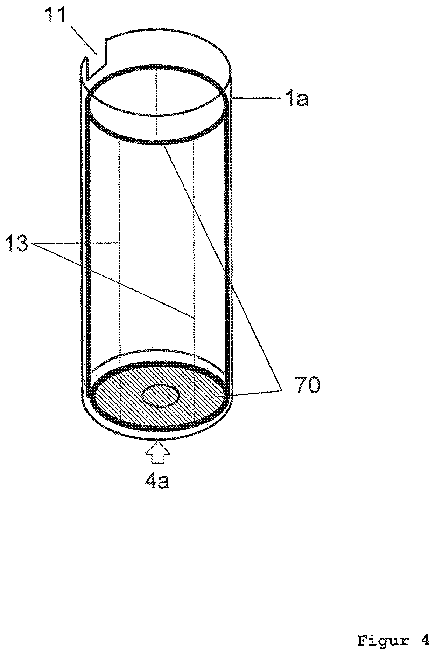

Der Fallschirmcontainer 77, welcher den Rettungsfallschirm 3 beherbergt, kann in mehreren Varianten ausgeführt werden:
- Mehrkapselsystem (Fig. 3) 7c mit versetzten Gleitringen (Fig. 1) 6; (Fig. 3) 6
- komplettes polyethylenes angepasstes Verpackungssystem (Fig. 4) 70 mit Sollbruchstellen (Fig. 4) 13.

In beiden Fällen ist ein sicherer und kompakter Wegtransport vom havarierten Luftfahrzeug gegeben. Ein Verklemmen beim Ausbringen der Rettungskapseln ist dadurch ausgeschlossen.

Die zentrale Leine 2a, welche mit dem Rettungsschirm 3 und den Halteseilen des Luftfahrzeuges befestigt sind, liegt frei auf dem System unter den dafür angepassten Containerausschnitt (Fig. 3) 11, damit bei Ausschuss oder Ausbringen des Fallschirmrettungssystems diese zentrale Leine 2a sofort automatisch freigegeben wird.

### Bezugszeichen

- 1: Containerhaube
- 1a: Druckluftcontainer
- 2a: zentrale Leine
- 2b: Hilfsfallschirm
- 3: Rettungsfallschirm
- 4: Druckflasche
- 4a: Pressluft
- 5: Pressluftflaschenauslassöffnung
- 5a: Steuerventil
- 6: versetzte Gleitringe
- 7c: Mehrkapselsystem
- 8: Zugkraft
- 9: einströmende Luft
- 11: Containerausschnitt
- 13: Sollbruchstelle
- 14: Luftfahrzeug
- 15: Datenlogger
- 16: Handauslösung
- 20: Rettungskapsel
- 70: Verpackungssystem
- 77: Fallschirmcontainer

- a): Ruhezustand
- b): Auslösung des Systems
- c): öffnender Rettungsfallschirm
- d): Flugrichtung
- e): Anströmungen

## Patentansprüche

1. Verfahren für ein intelligentes Fallschirmrettungssystem für bemannte und unbemannte Luftfahrzeuge, wobei eine Erfassung von Flug- und Motordaten mit einem Datenlogger durchgeführt wird und in dem Datenlogger die Daten ausgewertet werden und dadurch eine Handauslösung und/oder eine automatische Auslösung über eine drahtlose Fernübertragung durchgeführt wird, **dadurch gekennzeichnet, dass** die Flug- und Motordaten des Luftfahrzeuges (14) mit einem Datenlogger (15) eingebracht und ausgewertet werden und dadurch eine Handauslösung (16) und/oder eine automatische Auslösung des Fallschirmcontainers (77), welcher aus einer Rettungskapsel (20) mit einem Rettungsfallschirm (3) und einem Hilfsfallschirm (2b) besteht und die Rettungskapsel (20) in einem Druckluftcontainer (1a) des Fallschirmcontainers (77) vorhanden ist, ausgeführt wird und nach Auslösung des Fallschirmcontainers (77) eine definierte und gerichtete komprimierte Pressluft (4a) aus einer Druckflasche (4) und einem Steuerventil (5a) zwischen der Druckflasche (4) und dem Druckluftcontainer (1a) so optimiert wird, dass der Fallschirmcontainer (77) mit dem innen liegenden Rettungsfallschirm geregelt ausgebracht wird.

2. Vorrichtung zur Durchführung des Verfahrens für ein intelligentes Fallschirmrettungssystem für bemannte und unbemannte Luftfahrzeuge **dadurch gekennzeichnet, dass** ein Fallschirmcontainer (77), bestehend aus einer Rettungskapsel (20) mit einem Rettungsfallschirm (3) und einem Hilfsfallschirm (2b), gegeben ist und die Rettungskapsel (20) in einem Druckluftcontainer (1a) des Fallschirmcontainers (77) vorhanden ist und dabei eine Auslösefunktion über eine verbundene Druckflasche (4) mit Pressluft (4a) und ein Steuerventil (5a) zwischen der Druckflasche (4) und dem Druckluftcontainer (1a) des Fallschirmcontainers (77) stattfindet.

3. Vorrichtung nach Anspruch 2 **dadurch gekennzeichnet, dass** ein Rettungsfallschirm (3) in einer mehrteiligen, nicht fest geschlossenen mit mehreren Gleitringen versehenen Kapsel eingefasst ist, welche wiederum in einem angepassten Fallschirmcontainer (77) integriert ist, um diesen mittels komprimierter Pressluft (4a) auszubringen.

4. Vorrichtung nach den Ansprüchen 2 und 3 **dadurch gekennzeichnet, dass** ein Rettungsfallschirm (3) so verpackt ist, dass dieser mittels anliegendem flexiblen, gleitfähigen und mit Sollbruchstellen (13) ausgestatteten Verpackungssystem (70) im dafür angepassten Fallschirmcontainer (77) integriert ist, um diesen mittels komprimierter Pressluft (4a) auszubringen.

## Claims

1. Process for an intelligent parachute rescue system for manned and unmanned aircraft, where a recording of flight and engine data is implemented with a data logger and the data is evaluated in the data logger and a manual activation and/or an automatic activation is implemented by this via a wireless remote transmission, **characterised in that** the flight and engine data of the aircraft (14) is collated and evaluated with a data logger (15) and in this way a manual activation (16) and/or an automatic activation of the parachute container (77), which consists of a rescue capsule (20) with a rescue parachute (3) and a drogue parachute (2b), is implemented and the rescue capsule (20) is enclosed in a compressed air container (1a) of the parachute container (77) and, after activation of the parachute container (77), a defined and directed flow of compressed air (4a) from a pressure bottle (4) and a control valve (5a), between the pressure bottle (4) and the compressed air container (1a), is optimised so that the parachute container (77), with the internally contained rescue parachute, is extracted in a controlled way.

2. Equipment for the implementation of the process for an intelligent parachute rescue system for manned and unmanned aircraft, **characterised in that** a parachute container (77), consisting of a rescue capsule (20) with a rescue parachute (3) and a drogue parachute (2b), is provided and the rescue capsule (20) is enclosed in a compressed air container (1a) of the parachute container (77) and in this case there occurs a release function over a connected pressure bottle (4) with compressed air (4a) and a control valve (5a) between the pressure bottle (4) and the compressed air container (1a) of the parachute container (77).

3. Equipment according to Claim 2, **characterised in that** a rescue parachute (3) is enclosed in a multiple-part capsule, which is not closed off and is provided with several slip rings, which in turn is integrated into an adapted parachute container (77), in order to bring it out with compressed air (4a).

4. Equipment according to Claims 2 and 3, **characterised in that** a rescue parachute (3) is packed so that, by means of a fitting flexible, sliding packaging system (70), which is equipped with pre-determined break points (13), it is integrated into the parachute container adapted for that (77) in order to bring it out with compressed air (4a).

## Revendications

1. Procédure pour un système de parachute de secours intelligent pour avions avec et saris équipage, incluant une saisie des données de vol et des caractéristiques du moteur au moyen d'un enregistreur de données, une évaluation des données dans l'enregistreur de données autorisant un déclenchement manuel et/ou un déclenchement automatique via une télécommande sans fil, **caractérisé en ceci** que les données de vol et caractéristiques du moteur de l'avion (14) sont enregistrées et évaluées au moyen d'un enregistreur de données (15), autorisant un déclenchement manuel (16) et/ou un déclenchement automatique du conteneur de parachute (77), lequel est constitué d'une capsule de sauvetage (20) avec un parachute de secours (3) et un parachute auxiliaire (2b), la capsule de sauvetage (20) se trouvant dans un conteneur d'air comprimé (1a) du conteneur de parachute (77), dans le but d'optimiser, après déclenchement du conteneur de parachute (77), un flux d'air comprimé défini et dirigé (4a) depuis un récipient pressurisé (4) et via une vanne de commande (5a) entre le récipient pressurisé (4) et le conteneur d'air comprimé (1a), de manière à ce que le conteneur de parachute (77) soit éjecté de façon contrôlée avec le parachute de secours se trouvant à l'intérieur.

2. Dispositif permettant la mise en œuvre de la procédure pour un système de parachute de secours intelligent pour avions avec et sans équipage, **caractérisé en ceci** qu'on a un conteneur de parachute (77) constitué d'une capsule de sauvetage (20) avec un parachute de sauvetage (3) et un parachute auxiliaire (2b), la capsule de sauvetage (20) se trouvant dans un conteneur d'air comprimé (1a) du conteneur de parachute (77) et une fonction de déclenchement ayant lieu par le biais d'un récipient pressurisé (4) raccordé, via un flux d'air comprimé (4a) et une vanne de commande (5a) entre le récipient pressurisé (4) et le conteneur d'air comprimé (1a) du conteneur de parachute (77).

3. Dispositif selon la revendication 2, **caractérisé en ceci** qu'un parachute de secours (3) est enfermé dans une capsule en plusieurs parties non entièrement close et munie de plusieurs bagues coulissantes, elle-même intégrée dans un conteneur de parachute adapté (77), afin de l'éjecter via un flux d'air comprimé (4a).

4. Dispositif selon les revendications 2 et 3, **caractérisé en ceci** qu'un parachute de secours (3) est emballé de telle sorte qu'il est intégré dans le conteneur de parachute (77) adapté à cet effet au moyen d'un système d'emballage (70) contigu, flexible, coulissant et doté de points de rupture (13), afin de l'éjecter via un flux d'air comprimé (4a).
